# EUROPEAN PATENT APPLICATION

(11) **EP 1 865 238 A1**
(43) Date of publication of application: **12.12.2007**
(21) Application number: 07109843.8
(22) Date of filing: 08.06.2007
(51) Int. Cl.: F16K 15/18

(54) **Valve guide and seat**

(30) Priority: 09.06.2006 US 450480
(71) Applicant: Honeywell International Inc., Morristown, NJ 07962 (US)
(72) Inventor: Franconi, Robert B., New Hartford, CT 06057 (US)
(74) Representative: Haley, Stephen

(57) **Abstract**

An apparatus is provided for a valve assembly comprising a valve element (12) movable between open and closed positions, a valve seat (14), a valve guide (16), and a plurality of vents (18). The valve seat (14) has a valve seat surface (22) against which the valve element (12) seats when in the closed position, and a valve seat passage (24) extending therethrough. The valve guide (16) is coupled to the valve seat (14), and has at least an inner surface (28) and an outer surface (30). The valve guide inner surface (28) defines a valve guide passage (32) that is at least substantially aligned with the valve seat passage (24). The plurality of vents (18) are formed between the valve guide inner (28) and outer surfaces (30), and are in fluid communication with the valve guide passage (32) within which the valve element (12) moves. Each of the vents (18) is disposed radially outward of the valve element (12).

## Description

The present invention generally relates to an assembly for a valve, and more particularly relates to a valve assembly with an improved valve ball guide and seat design.

Valves are used to control gases or other fluids in various types of apparatus and vehicles, such as aircraft. For example, valves may be used to control the supply of bleed air on aircraft by opening, closing, or partially obstructing various passageways, among various other valve uses. There are many different types of valves used in aircraft, other vehicles, and other apparatus, such as ball valves, control valves, and solenoid valves, among others. By way of example only, a particular type of ball valve generally regulates fluid flow through the use of a free-floating spherical object that moves in response to fluid or mechanical pressure. These and other types of valves serve useful functions for aircraft and other types of apparatus and vehicles. However, many valves have less than ideal guidance or alignment, provide less than ideal operation or sealing, or experience uneven or excessive wear, leakage, friction or contamination buildup, and there is a need for a valve assembly that improves upon one or more of these problems. The present invention addresses one or more of these needs.

An apparatus is provided for a valve assembly. In one embodiment, and by way of example only, the valve assembly comprises a valve element, a valve seat, a valve guide, and a plurality of vents. The valve element is movable between an open position and a closed position. The valve seat has a valve seat surface against which the valve element seats when in the closed position, and a valve seat passage extending therethrough. The valve guide is coupled to the valve seat, and has at least an inner surface and an outer surface. The valve guide inner surface defines a valve guide passage that is at least substantially aligned with the valve seat passage. The plurality of vents are formed between the valve guide inner and outer surfaces, and are in fluid communication with the valve guide passage within which the valve element moves. Each of the vents is disposed radially outward of the valve element.

In another embodiment, and by way of example only, the valve assembly comprises a valve element, an actuator, a valve seat, a valve guide, and a plurality of vents. The actuator is disposed adjacent to the valve element, and is configured to at least facilitate movement of the valve element between an open position and a closed position. The valve seat has a valve seat surface against which the valve element seats when in the closed position, and a valve seat passage extending therethrough. The valve guide is coupled to the valve seat, and has at least an inner surface and an outer surface. The valve guide inner surface defines a valve guide passage that is at least substantially aligned with the valve seat passage. The plurality of vents are formed between the valve guide inner and outer surfaces, and are in fluid communication with the valve guide passage within which the valve element moves. Each of the vents is disposed radially outward of the valve element.

In yet another embodiment, and by way of example only, the valve assembly comprises a spherical valve element, an actuator, a valve seat, a cylindrical valve guide, and a plurality of vents. The spherical valve element is at least substantially spherical in shape. The actuator is disposed adjacent to the spherical valve element, and is configured to at least facilitate movement of the spherical valve element between an open position and a closed position. The valve seat has a flat valve seat surface that is at least substantially flat with a sharp seating edge, against which the spherical valve element seats when in the closed position, and a valve seat passage extending therethrough. The valve seat passage is at least substantially perpendicular to the flat valve seat surface. The cylindrical valve guide is coupled to the valve seat, and has at least an inner surface and an outer surface. The valve guide inner surface defines a valve guide passage that is at least substantially aligned with the valve seat passage. The plurality of vents are formed between the cylindrical valve guide inner and outer surfaces, and are in fluid communication with the valve guide passage within which the spherical valve element moves. Each of the vents is disposed at least substantially perpendicular to the valve guide passage and radially outward of the spherical valve element.

The present invention will hereinafter be described in conjunction with the following drawing figures, wherein like numerals denote like elements, and

FIG. 1 depicts a cross section view of a valve assembly with a valve element, a valve seat, a valve guide, and a plurality of vents;

FIG. 2 depicts a front view of the valve assembly of FIG. 1; and

FIG. 3 depicts an exploded perspective view of the valve assembly of FIG. 1.

The following detailed description of the invention is merely exemplary in nature and is not intended to limit the invention or the application and uses of the invention. Furthermore, there is no intention to be bound by any theory presented in the preceding background of the invention or the following detailed description of the invention.

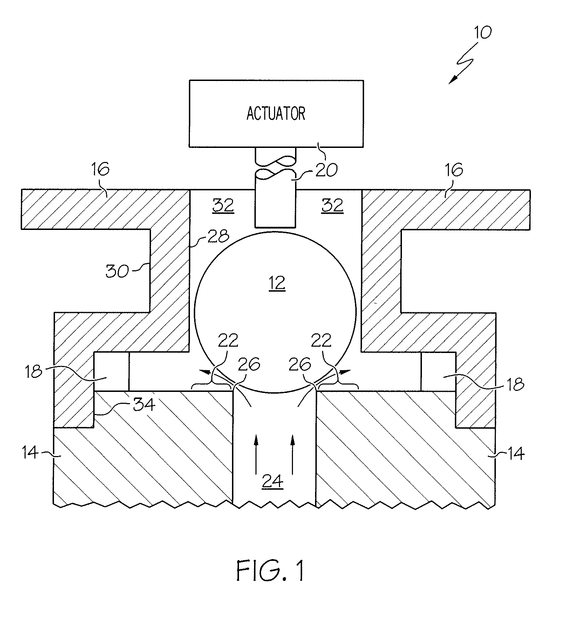

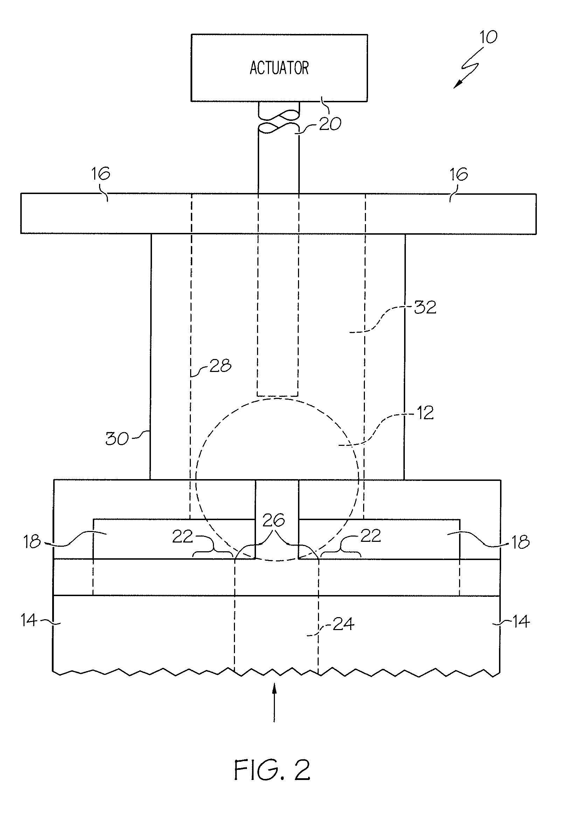

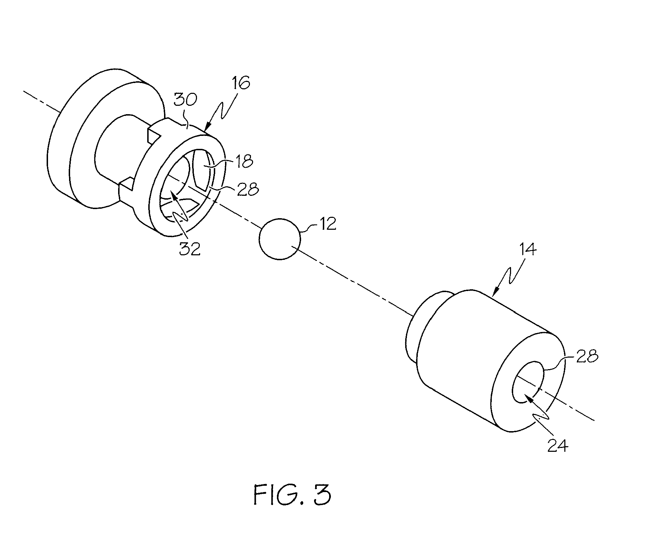

FIGs. 1-3 depict a cross section, a front view, and an exploded perspective view, respectively, of an exemplary embodiment of a valve assembly 10. The valve assembly 10 includes a valve element 12, a valve seat 14, a valve guide 16, and a plurality of vents 18. In the depicted embodiment, the valve assembly 10 additionally includes an actuator 20.

As depicted in FIGs. 1-3, the valve element 12 is preferably a spherical ball element, and can be made of ceramic material or steel, by way of example only. However, it will be appreciated by one of skill in the art that the valve element 12 can take any one of numerous different shapes and sizes, and can be made of any one of numerous different types of material. Regardless of its particular shape, size and material, the valve element 12 is movable between and open position and a closed position. In the open position, the valve element 12 is disposed at least some distance away from the valve seat 14, thereby allowing fluid to flow through the valve seat 14. Conversely, when in the closed position, the valve element 12 seats against the valve seat 14, thereby restricting the flow of fluid therethrough.

The valve seat 14 has a valve seat surface 22 and a valve seat passage 24 extending therethrough. The valve seat surface 22 is preferably flat with sharp seating edges 26. The sharp seating edges 26 help to create an effective seal against the valve element 12 while in the closed position, minimizing leakage from the valve assembly 10. Moreover, the sharp seating edges 26 provide less surface area for contaminants to lodge, and allow for easier removal of such contaminants. The valve seat surface 22 can be manufactured, by way of example only, through lapping on a lapping stone, and/or through drilling, reaming, and/or honing. In addition, the sharp seating edges 26 can be fine tuned for improved sealing through use of the valve element 12, for example by putting a weight or a lapping compound on the valve element 12 and pressing or rotating the valve element against the sharp seating edges 26. It will be appreciated that the valve seat surface 22 may take different shapes, and may be manufactured using any one or more of numerous different methods. Regardless of the particular shape and methods of creating the valve seat surface 22, the valve element 12, as noted above, seats against the valve seat surface 22 when in the closed position. The valve seat passage 24 extends through the valve seat 14 and, as depicted in FIGs. 1-3, is preferably disposed at least substantially perpendicular to the valve seat surface 22. However, it will be appreciated that the valve seat passage 24 may take different forms in which the angle formed between the valve seat passage 24 and the valve seat surface 22 is other than ninety degrees.

The valve guide 16 is coupled to the valve seat 14, and has at least an inner surface 28 and an outer surface 30. The valve guide inner surface 28 defines a valve guide passage 32 that is at least substantially aligned with the valve seat passage 24. As depicted in FIGs. 1-3, the valve guide 16 is preferably cylindrical in shape, and fits closely against the valve seat 14. Most preferably the valve guide 16 is press fit against the valve seat 14, for example as shown in FIG. 1 as press fit 34. By way of example only, in one particular preferred embodiment discussed for illustrative purposes, the inner diameter of the section of the valve guide 16 that engages the valve seat 14 in the press fit 34 is about 0.2500 inches, plus or minus 0.0002 inches, and the outer diameter of the section of the valve seat 14 that engages the valve guide 16 in the press fit 34 is about 0.2508 inches, plus or minus 0.0001 inches. The close press fit 34 provides excellent guidance for the valve element 12. Moreover, because the valve guide 16 and the valve seat 14 are separate pieces press fit together, this allows for easier access to the valve seat 14 and the valve seat surface 22, thereby making it easier to inspect, monitor, maintain, clean, and/or repair the valve assembly 10.

In addition, the valve guide passage 32 is preferably concentrically aligned with the valve seat passage 24 and at least substantially perpendicular to the valve seat surface 22. The valve guide inner surface 28 preferably provides a close fit to the valve element 12, thereby minimizing undesirable lateral movement of the valve element 12, uneven wear on the valve seat surface 22, and flow of fluids around the valve element 12 and through the valve guide passage 32. For example, in one particular preferred embodiment discussed above for illustrative purposes, the valve guide passage 32 is between about 0.129 and 0.130 inches in diameter, while the valve element 12 is approximately 0.125 inches in diameter.

In terms of manufacturing, the valve guide passage 32 is preferably honed and dry film coated to minimize friction and optimize the fit with the valve element 12. In addition, preferably the valve guide passage 32 is machined in concert with the section of the valve guide 16 that engages the valve seat 14 in the press fit 34, and the valve seat passage 24 is machined in concert with the section of the valve seat 14 that engages the valve guide 16 in the press fit 34, in a single process, thereby improving the alignment and concentricity between the valve guide passage 32 and the valve seat passage 24. However, it will be appreciated that the valve guide 16, the valve guide passage 32, the valve seat passage 24, and the various other components of the valve assembly 10 can also take various other shapes, sizes, and configurations, and can be manufactured using any one of numerous different processes.

As shown in FIGs. 1-3, the plurality of vents 18 are formed between the valve guide inner and outer surfaces 28, 30, and are in fluid communication with the valve guide passage 32. Each of the vents 18 is disposed radially outward of the valve element 12. In a preferred embodiment, there are four vents 18 disposed symmetrically about the circumference of the valve guide 16, and each of the vents 18 is disposed at least substantially perpendicular to the valve guide passage 32. However, it will be appreciated that the number of vents 18 may vary, and that the vents 18 may take any one of numerous different shapes and configurations.

The valve assembly 10, as was previously noted, may also include an actuator 20, which is configured to at least facilitate movement of the valve element 12 between the open and closed positions. In a preferred embodiment depicted in FIGs. 1-2, the actuator 20 includes a rod disposed adjacent to the valve element 12. In this preferred embodiment, the actuator 20 moves the valve element 12 into the closed position by exerting a downward force against the valve element 12. Conversely, the actuator 20 facilitates movement of the valve element 12 into the open position by reducing or removing the force applied to the valve element 12, thereby allowing movement of the valve element 12 as a result of fluid pressure in the valve seat passage 24. However, it will be appreciated that the actuator 20 can take any one of numerous different shapes, sizes and configurations, and can move, and/or facilitate movement of, the valve element 12 in any one of numerous different manners.

The operation of the valve assembly 10, in one particular embodiment, is as follows, assuming the valve element 12 is initially in the closed position. The valve element 12 is moved from the closed position to the open position via operation of the actuator 20 as described above. In particular, when the actuator 20 removes or reduces the force on the valve element 12, fluid pressure in the valve seat passage 24 moves the valve element 12 away from the valve seat surface 22 to the open position. As the valve element 12 moves to the open position, pressurized fluid flows through the valve seat passage 24 and past the valve seat surface 22. The fluid then flows toward the plurality of vents 18, preferably by making a ninety degree turn away from the valve element 12, although it will be appreciated that the angles may differ. As mentioned above, the fluid is substantially restricted from flowing through the valve guide passage 32 beyond the valve element 12, due to the close fit between the valve guide inner wall 28 and the valve element 12.

As the fluid flows through the plurality of vents 18, the fluid encounters a significantly larger flow area. For example, in a preferred embodiment, the flow area encountered may be approximately four times greater than the flow area around the valve seat surface 22, although it will be appreciated that the relative and/or absolute sizes of the flow areas may differ. Consequently, the fluid rapidly expands and decelerates as it travels through the plurality of vents 18. This in turn minimizes the resulting pressure decrease, so that the valve element 12 continues to operate effectively, for example by remaining adjacent to the actuator 20. Moreover, due to the rapid deceleration of the fluid flow, and the direction of the fluid flow away from the valve element 12, contaminants are further reduced in the valve assembly 10.

Conversely, when the valve element 12 is moved into the closed position, for example through operation of the actuator 20 as described above, the valve element 12 seats against the sharp seating edges 26 of the valve seat surface 22. The above-mentioned seal formed between the sharp seating edges 26 and the valve element 12 while in the closed position at least substantially restricts the flow of fluids from the valve seat passage 24.

As described above, the valve assembly 10 provides for excellent guidance of the valve element 12, with the potential for decreased friction, leakage and wear, and/or with enhanced operability and/or ease of inspection, maintenance, and repair. It will be appreciated that the valve assembly 10 can be used with any one of numerous different types of valve devices, including for example solenoid valves, hydraulic valves, and pneumatic values, among various other different types of valves.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims and their legal equivalents.

## Claims

1. A valve assembly (10) comprising:
a valve element (12), movable between an open position and a closed position;
a valve seat (14) having a valve seat surface (22) against which the valve element (12) seats when in the closed position, and having a valve seat passage (24) extending therethrough;
a valve guide (16) coupled to the valve seat (14), the valve guide (16) having at least an inner surface (28) and an outer surface (30), the valve guide inner surface (28) defining a valve guide passage (32) that is at least substantially aligned with the valve seat passage (24); and
a plurality of vents (18) formed between the valve guide inner (28) and outer (30) surfaces and in fluid communication with the valve guide passage (32) within which the valve element (12) moves, each of the vents (18) disposed radially outward of the valve element (12).

2. The valve assembly (10) of Claim 1, wherein the valve element (12) is at least substantially spherical in shape.

3. The valve assembly (10) of Claim 1, wherein the valve guide (16) is at least substantially cylindrical in shape.

4. The valve assembly (10) of Claim 1, wherein the valve seat surface (22) is at least substantially flat.

5. The valve assembly (10) of Claim 1, wherein the valve seat surface (22) includes a sharp seating edge (26).

6. The valve assembly (10) of Claim 1, wherein the valve seat passage (24) is at least substantially perpendicular to the valve seat surface (22).

7. The valve assembly (10) of Claim 1, wherein the vents (18) are at least substantially symmetric about the valve guide (16).

8. The valve assembly (10) of Claim 1, wherein each of the vents (18) is at least substantially perpendicular to the valve guide passage (32).

9. The valve assembly (10) of Claim 1, wherein the valve guide (16) is press fit against the valve seat (14).

10. The valve assembly (10) of Claim 1, further comprising an actuator (20) disposed adjacent to the valve element (12) and configured to at least facilitate movement of the valve element (12) between the open and closed positions.
